# EUROPEAN PATENT SPECIFICATION

(11) **EP 3 761 786 B1**
(45) Date of publication and mention of the grant of the patent: **20.04.2022**
(21) Application number: 18732496.7
(22) Date of filing: 05.03.2018
(51) Int. Cl.: A01M 7/00

(54) **INTEGRATED NOZZLE FOR PORTABLE AGRICULTURAL MACHINERY**
INTEGRIERTE DÜSE FÜR TRAGBARE LANDWIRTSCHAFTLICHE MASCHINEN
BUSE INTÉGRÉE DE MACHINE AGRICOLE PORTABLE

(43) Date of publication of application: 13.01.2021
(73) Proprietor: Cifarelli S.p.A., 27058 Voghera (Pavia) (IT)
(72) Inventor: CIFARELLI, Roberto, 27058 Voghera (Pavia) (IT)
(74) Representative: Tarabbia, Luigi
(86) International application number: PCT/IT2018/000034
(87) International publication number: WO 2019/171405

(56) References cited:
- EP-A1- 1 518 458
- EP-A2- 2 248 594
- WO-A1-98/06257
- FR-A1- 3 037 827
- US-A- 5 224 651

## Description

The present invention relates to the field of agricultural devices for leaf hydration. In particular, the present invention relates to an end accessory for agricultural shoulder sprayers or atomizers and a related agricultural shoulder sprayer or sprayer.

There are known devices for agriculture which have one or more atomizing nozzles fed by a liquid contained in a tank and put under pressure by a manual or motorized pump.

The liquid to be atomized can be made up of various elements including, alternatively or in combination with each other, water, insecticides, fertilizers and other nutrients for the plants.

The nozzles are configured to break the liquid droplets so that, under the action of the pump which puts it under pressure, it atomises out of the nozzle and settles on the leaves to create a droplet layer, which is as uniform as possible, to be adsorbed by the plant in order to create the desired effect.

Also known are devices which rotate the nozzles to exploit their centrifugal force so as to obtain a better breakage of the drop. State of the art documents in this technical field are for example: US 5 224 651 A, WO 98/06257 A1, FR 3 037 827 A1.

This type of device has the drawback of allowing an effective hydration of the plants exclusively in the vicinity of the nozzle. This causes problems especially in the case of manually operated shoulder sprayers and atomizers, with which it may be difficult to reach the highest branches of the plants to be hydrated and which, in any case, cause long application times to reach all the leaves.

Another drawback that characterizes conventional sprayers is typically the low speed of the drops to reach the leaf, which prevents further breakages of the same and can in some cases lead to unsatisfactory wetting, in particular as to the rear part of the leaves which is not exposed to the flow. In this context, the technical task underlying the present invention is to propose an end accessory for agricultural shoulder sprayers or atomizers and a related shoulder sprayer or atomizer which overcomes at least some of the drawbacks of the known art mentioned above.

In particular, it is object of the present invention to make it available an end accessory for agricultural shoulder sprayers or atomizers and a related agricultural shoulder sprayer or sprayer able to improve the range with respect to the known devices.

A further object of the present invention is to propose an end accessory for agricultural shoulder sprayers or atomizers and a relative shoulder sprayer or agricultural atomizer capable of improving the surface hydration of the leaves, in particular of their rear side with respect to the flow origin.

The mentioned technical task and the specified objects are substantially achieved by an end accessory for agricultural shoulder sprayers or atomizers and a relative agricultural shoulder sprayer or atomizer, comprising the technical features set out in one or more of the appended claims.

In particular, according to a first aspect, the present invention relates to an end accessory for agricultural shoulder sprayers or atomizers, comprising a support portion which can be bound to a manoeuvring arm of an agricultural shoulder sprayer, a rotating portion rotatably connected to the support portion and comprising a plurality of blades defining a fan, actuation means connected to the rotating portion to carry out a controlled rotation of the rotating portion with respect to the support portion. The end accessory comprises at least one spraying nozzle configured for the emission of atomized fluid and defines at least one supply duct for the spraying nozzle and the support portion has an inlet section of the supply duct which can be coupled to a mutual outlet section of a respective connecting duct inside the manoeuvring arm.

According to a second aspect, the present invention relates to an agricultural shoulder sprayer or atomizer, comprising a main body supporting a tank, an end accessory, a manoeuvring arm connected to the end accessory and defining a connecting duct between the tank and the supply duct inside the end accessory, and a power unit comprising actuating means and configured to move the rotating portion and / or to pressurize a liquid between the tank and the end accessory.

In one or more of the above aspects, the present invention can comprise one or more of the following features.

Preferably, the spraying nozzle faces an operating volume hit by an air flow produced by the fan during a rotation of the fan and the operating volume is arranged downstream of the fan relative to the direction of air flow.

Preferably, the end accessory comprises a tubular body associated with the fan to define a ducted fan configuration and the tubular body is preferably secured to the support portion.

Preferably, the tubular body has an air inlet for the fan located in correspondence of the support portion.

Preferably, the spraying nozzle is oriented parallel to a rotation axis of the fan.

According to the invention the spraying nozzle is defined by the rotating portion and the rotating portion, at least partly, defines the supply duct.

Preferably, the rotating portion has an ogive which is coaxial and integral with the fan.

Preferably, an end portion of the ogive supports a protrusion developing along a rotation axis of the fan, and the protrusion comprises the spraying nozzle.

Preferably, the end accessory comprises a plurality of spraying nozzles emerging from the ogive and a plurality of junction ducts connect the supply duct and the plurality of spraying nozzles emerging from the ogive. Preferably, the spraying nozzles emerging from the ogive are arranged circumferentially relative to a rotation axis of the fan.

Preferably, the end accessory comprises a plurality of spraying nozzles arranged on the blades of the fan and the blades further define a plurality of junction ducts for a connection between the supply duct and the plurality of spraying nozzles arranged on the blades of the fan.

Preferably, the power unit comprises a peristaltic pump configured to put under pressure the liquid between the tank and the end accessory. Preferably, the sprayer comprises a control interface for controlling a rotation speed of the fan and / or a pressure and / or flow rate of the liquid between the tank and the end accessory.

Preferably, the control interface comprises a joint control device while an output of the joint control device jointly controls the rotation speed of the fan and the pressure and / or the flow rate of the liquid.

Preferably, the sprayer comprises a rotation control device for an independent control of the rotation speed and / or a pressure and / or flow rate control device for an independent control of the pressure.

Preferably, the sprayer comprises a knob, preferably fixed to the manoeuvring arm, and the knob supports the rotation control device and / or the pressure and / or flow rate control device and / or the joint control device.

Further characteristics and advantages of the present invention will become more apparent from the description of an exemplary, but not exclusive, and therefore non-limiting preferred embodiment of an end accessory for agricultural shoulder sprayers or atomizers and a related agricultural shoulder sprayer or atomizer.

Such description will be set forth hereinafter with reference to the accompanying drawings given only for illustrative and, therefore, non-limiting purpose, wherein:
- Figure 1 is a simplified view of an end accessory for agricultural shoulder sprayers or atomizers made according to the present invention;
- Figure 1A is a simplified sectional view of the end accessory of Figure 1;
- Figure 2 is a simplified view of an end accessory for agricultural shoulder sprayers or atomizers made according to an alternative embodiment of the present invention;
- Figure 3A is a simplified sectional view of an end accessory for agricultural shoulder sprayers or atomizers made according to another alternative embodiment of the present invention;
- Figure 3B is a simplified sectional view of an end accessory for agricultural shoulder sprayers or atomizers made according to another alternative embodiment of the present invention;
- Figure 4 is a simplified view of an agricultural shoulder sprayer or atomizer made according to the present invention.

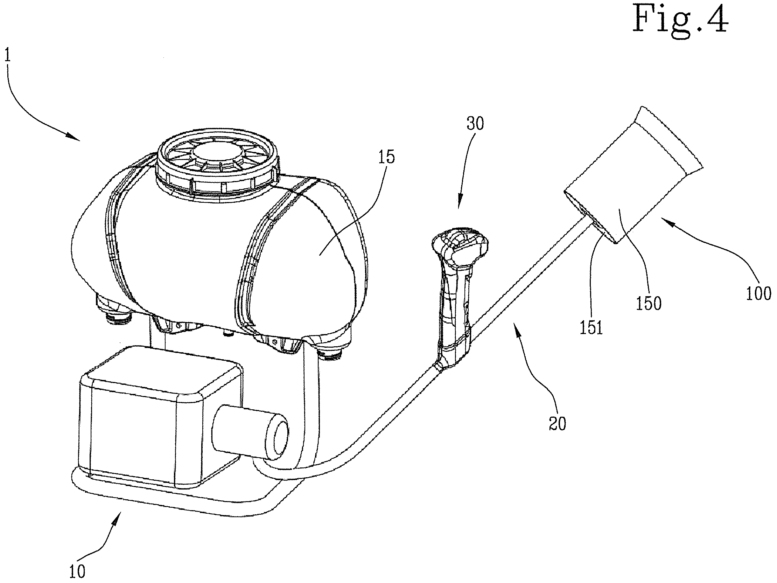

Referring to Figure 4, an agricultural shoulder sprayer or atomizer is generally indicated with 1 and will be referred to hereinafter as "sprayer 1". The sprayer 1 is configured to release water or suitable liquids for irrigating or for fighting parasites in an atomized form, that is, in small droplets having a diameter which can vary in size from about ten microns to one millimetre.

The sprayer 1 comprises a main body 10 which supports a tank 15 for containing the liquid to be sprayed and is provided with appropriate portions for the shoulder support of the device by an operator.

The sprayer 1 comprises a manoeuvring arm 20, internally defining a connecting duct 25, and an end accessory 100 for agricultural shoulder sprayers or atomizer, connected to the manoeuvring arm 20 so that the connecting duct 25 can establish a fluid communication between the tank 15 and the end accessory 100.

The end accessory 100, which is a further object of the present invention, comprises one or more spraying nozzles 102 and defines a fluid connection between each spraying nozzle 102 and the connecting duct 25 inside the manoeuvring arm 20 for feeding the same.

The manoeuvring arm 20 is rotatably connected to the main body 10 and is configured to allow the easy manual direction of the end accessory 100 at least vertically to adjust the elevation of the end accessory 10 by a rotation of the manoeuvring arm 20 around a horizontal axis with respect to a configuration of use of the sprayer 1. The horizontal orientation of the end accessory is instead directly adjustable by the operator through body movements.

In a preferred embodiment, the sprayer 1 comprises a power unit configured to pressurize the liquid in the connecting duct 25 between the tank 15 and the end accessory 100, for example by means of a peristaltic pump arranged along the connecting duct 25. The power unit is configured to determine a fluid pressure and / or flow rate upstream of each spraying nozzle 102 adjusted according to the section and to the configuration of the spraying nozzle 102 itself to determine an effective spraying of the outgoing flow therefrom.

Preferably, the sprayer 1 comprises a knob 30 secured to the manoeuvring arm 20 so as to be conveniently gripped by an operator during the use of the sprayer 1 and used in the direction of the manoeuvring arm 20 itself. Preferably, the knob 30 supports a control interface configured to allow the control by the user of some operating parameters of the sprayer 1 and in particular of the end accessory 100.

In a preferred embodiment, the sprayer 1, in particular the knob 30, has a pressure and / or flow rate control device to allow a control of the pressure (and / or flow rate) of the liquid directed to the end accessory 100 by an operator, preferably arranged in correspondence of said control interface. The end accessory 100 comprises a support portion 110 that can be bound to the manoeuvring arm 20 by means of reversible coupling members, for example threaded. Moreover, the end accessory 100 defines internally a supply duct 105 which can be coupled to the connecting duct 25 inside the manoeuvring arm 20 for supplying each spraying nozzle 102. In particular, the support portion 110 defines an inlet section 106 of the supply duct 105 which can be coupled to a mutual outlet section 26 of the connecting duct 25 by means of a flow tight coupling. The end accessory 100 comprises a rotating portion 120 rotatably connected to the support portion 110 so that, when the end accessory 100 is mounted on the manoeuvring arm 20, the support portion 110 and the rotating portion 120 define an extension of the manoeuvring arm 20 aligned with an end portion thereof.

The rotating portion 120 is rotatable and connected to the support portion 110 and is rotatable with respect to it around a rotation axis "R". Moreover, the rotating portion 120 comprises a plurality of blades 122a defining a fan 122 aligned with respect to the rotation axis "R" and configured to determine the air flow moving away from the support portion 110. Advantageously, each spraying nozzle 102 is facing an operating volume "E" hit by the air flow generated by the fan 122, preferably downstream of it with respect to the direction of the air flow, so that the atomized liquid emitted by it is hit by the air flow itself and carried by it. Preferably, each nozzle has a distance from the fan 122 along the rotation axis "R" lower than 20 cm, even more preferably lower than 10 cm. Furthermore, each spraying nozzle 102 is preferably oriented parallel to the rotation axis "R" of the rotating portion 120.

The end accessory 100 comprises actuating means 140 connected to the rotating portion 120 for actuating a controlled rotation of the latter, and hence of the fan 122, around a connecting hinge with the support portion 110. The actuation means 140 are part of said power unit of the sprayer 1 which is intended for both putting under pressure the liquid coming from the tank 15 and for rotating the fan 122. In one embodiment, the actuating means 140 have an independent mechanical power source, for example a dedicated electric motor, and the support portion has connecting members configured to transfer power from the manoeuvring arm 20 to the end accessory 100, for example, electrical connectors which can be coupled to respective connectors arranged on the manoeuvring arm 20.

In an alternative embodiment, the actuating means 140 share the mechanical power source with the liquid pressurization system, for example by exploiting the kinetic energy of the liquid moving in the supply duct 105 by means of a dedicated turbine.

The sprayer 1 comprises a rotation control device to allow a user to control the rotational speed of the rotating portion 120. In a preferred embodiment, the rotation control device is arranged in correspondence of the control interface on the knob 30 and operatively connected to the actuation means 140.

Preferably, the rotating portion 120 comprises an ogive124 integral with the fan 122 and having a symmetry axis aligned with the rotation axis "R" of the rotating portion 120, so as to provide an even sliding surface to the air flow coming from the fan 122.

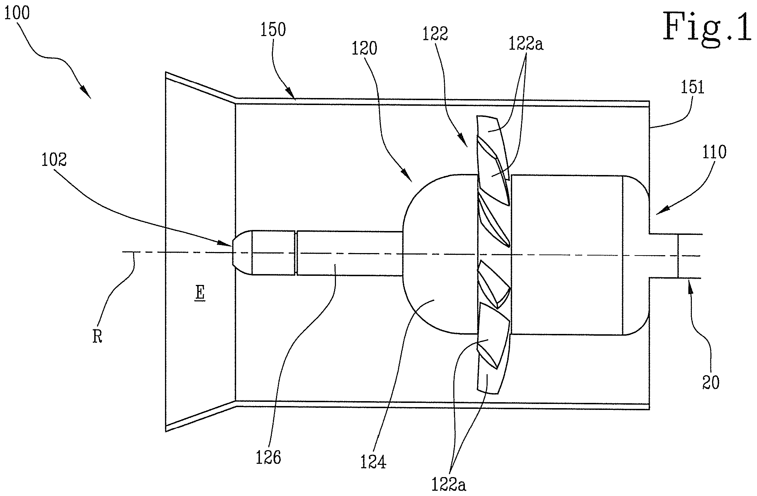

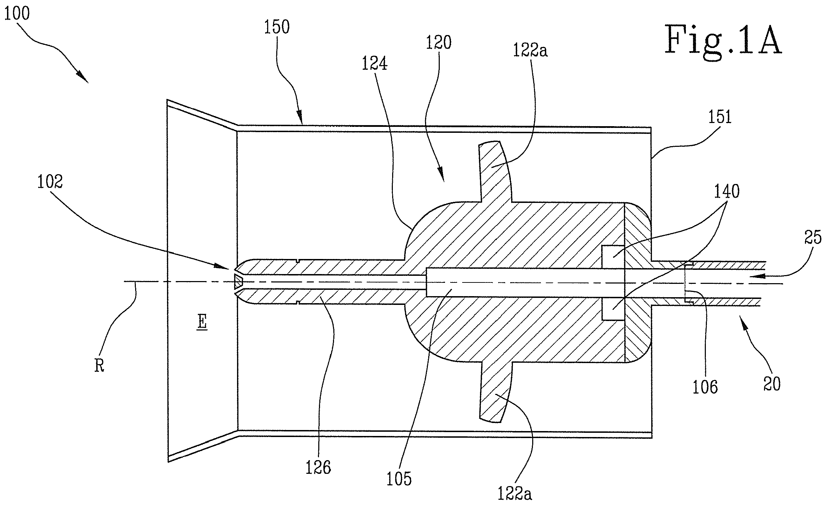

In a first embodiment, shown in figures 1 and 1A, the end accessory 100 has a single spraying nozzle 102 arranged on the ogive 124 and aligned with the rotation axis "R". Preferably, in this embodiment, an end portion 124a of the ogive 124 supports a protrusion 126 developing along the rotation axis "R" and has the spraying nozzle 102 directly connected to the supply duct 105.

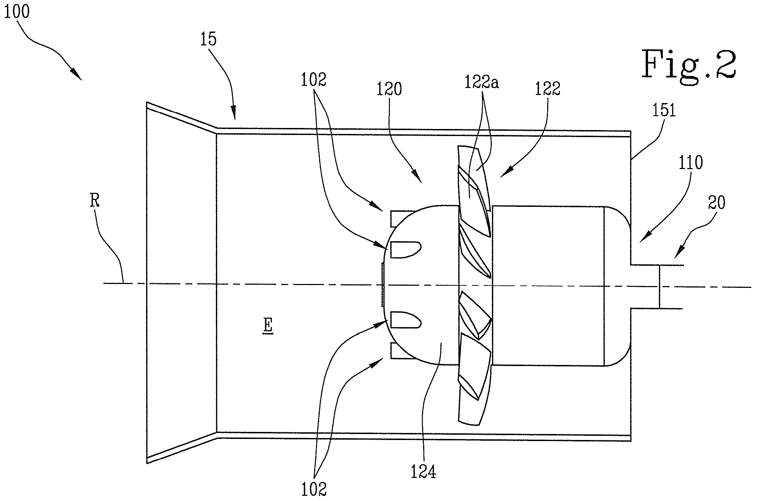

In a second embodiment, shown in Figure 2, the end accessory 100 has a plurality of spraying nozzles 102 of the type described above, emerging from the ogive 124 and circumferentially arranged thereon with respect to the rotation axis "R", preferably at an equal distance from it, and connected to the supply duct 105 through a plurality of respective junction ducts 106 so as to establish a flow communication with the connecting duct 25.

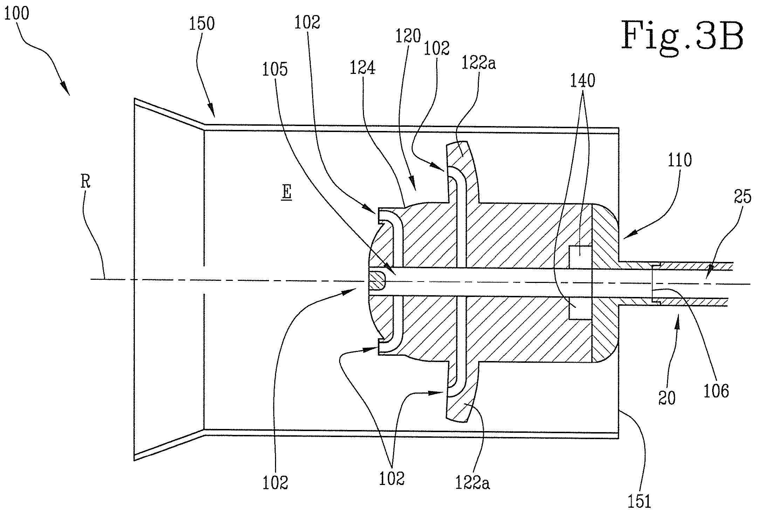

The configuration of the spraying nozzles 102 presented by the second embodiment can coexist with the spraying nozzle 102 presented by the first embodiment, as illustrated in Figure 3B, so as to define a configuration wherein a plurality of spraying nozzles 102 circumferentially arranged on the ogive 124 surrounds a central spraying nozzle 102.

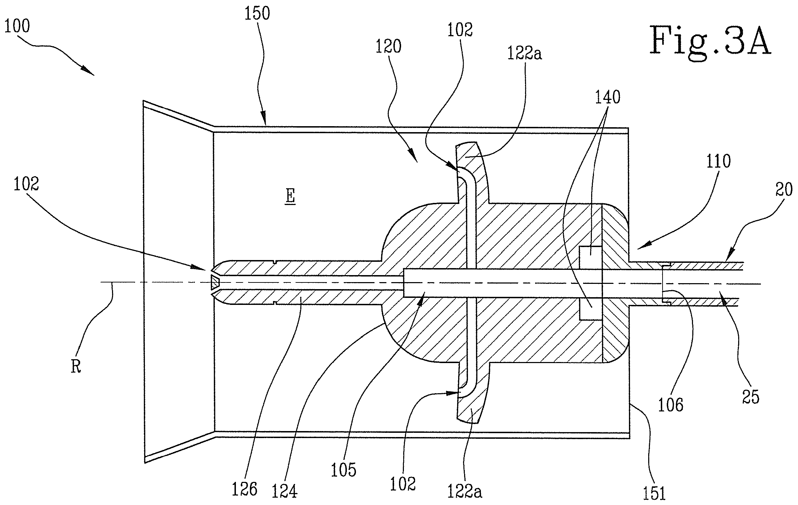

A third embodiment of the end accessory 100, shown in Figures 3A and 3B, it presents a plurality of spraying nozzles 102 of the type described above and arranged on the blades 122a of the fan 122. In this embodiment the blades 122a define internally a plurality of junction ducts 106 for connecting the spraying nozzles 102 to the supply duct 105.

As illustrated in Figures 3A and 3B, also the third embodiment can coexist with the first and / or the second embodiment so as to have an end accessory 100 having a plurality of spraying nozzles 102 in different configurations.

Preferably, in the embodiments disclosed above, the rotating portion 120 defines internally, at least partly, the supply duct 105 and the other part of the supply duct 105 is defined by the support portion 110.

In a preferred embodiment, the end accessory 100 comprises a tubular body 150 associated with the fan 122 and coaxial to its rotation axis "R", to define a ducted fan-shaped configuration so as to channel the air upstream of the fan 122 in the tubular body 150 and improving the aerodynamic properties of the fan 122 and the directional precision of the end accessory 100 in terms of air flow orientation.

The tubular body 150 is preferably fixed to the support portion 110 and has an air inlet 151 for the fan 122 arranged therein. Moreover, the tubular body 150 extends from the support portion 110 towards the rotating portion 120, preferably exceeding it in length so as to at least partly define said operating volume "E".

In a preferred embodiment, the sprayer 1 has, in correspondence of the control interface on the knob 30, a joint control device for a joint control of the rotation speed and of the liquid pressure. Preferably, the joint control device is associated in the control interface with an independent pressure and / or flow rate control device and / or with an independent control device of the rotation speed.

Advantageously, the control interface configured in this way allows the use of the device as a normal sprayer, by deactivating the rotation of the fan 122.

The present invention achieves the proposed object, overcoming the complained drawbacks of the prior art.

Advantageously, in fact, the end accessory configured as described and the related sprayer (or atomizer) increase the range of known shoulder sprayers and favour the breakage of the drop not only during the impact with the leaf but also - and above all - when the fluid is being expelled from the nozzle. Furthermore, the air stream allows to shake the leaves toward which the flow is directed, thus allowing the treatment to reach both sides of the leaves.

At the same time, the end accessory according to the invention allows to direct the air flow and the liquid / fluid with greater accuracy and precision, both in "ballistic" terms of trajectory and end point of spraying and in terms of circumscription and determination of the "target area" to be sprayed. Moreover, the disclosed sprayer has a considerable elasticity of use as it can be used both with the activated fan, increasing the range of the spray, and with the fan off, functioning, if necessary, as a traditional sprayer so as to save energy and not to hit the plants with a close air flow.

## Claims

1. End accessory (100) for agricultural shoulder sprayers or atomizers, including:
- a support portion (110) which can be bound to a manoeuvring arm (20) of the agricultural shoulder sprayer or atomizer (1) presenting a connecting duct (25) inside said manoeuvring arm (20);
- a rotating portion (120) rotatably connected to said support portion (110), said rotating portion (120) comprising a plurality of blades (122a) defining a fan (122);
- actuation means (140) connected to said rotating portion (120) to carry out a controlled rotation of said rotating portion (120) with respect to said support portion (110); and
- at least one spraying nozzle (102) configured for the emission of an atomized fluid and defining at least one supply duct (105) of said spraying nozzle (102), said support portion (110) having an inlet section (106) of said supply duct (105) configured to be coupled to a mutual outlet section of a said connecting duct (25);
**characterized in that** said at least one spraying nozzle (102) is defined by said rotating portion (120), said rotating portion (120) defining at least partly said at least one supply duct (105).

2. End accessory (100) according to claim 1, wherein said at least one spraying nozzle (102) faces an operating volume € hit by an air flow produced by said fan (122) during a rotation of said fan (122), said operating volume € being arranged downstream of said fan (122) with respect to the direction of said air flow.

3. End accessory (100) according to claim 1 or 2, comprising a tubular body (150) associated with said fan (122) to define a ducted fan configuration, said tubular body (150) being preferably fixed to said support portion (110).

4. End accessory (100) according to claim 3, wherein said tubular body (150) has an air inlet (151) for said fan (122) arranged in correspondence of said support portion (110) and preferably upstream of the operating volume €.

5. End accessory (100) according to one or more of the preceding claims, wherein said at least one spraying nozzle (102) is oriented parallel to a rotation axis ^{®} of said fan (122).

6. End accessory (100) according to one or more of the preceding claims, wherein the rotating portion (120) has an ogive (124) which is coaxial and integral with the said fan (122).

7. End accessory (100) according to claim 6, wherein an end portion of said ogive (124) supports a protrusion (126) extending along a rotation axis (R) of said fan (122), said protrusion (126) comprising at least one spraying nozzle (102).

8. End accessory (100) according to claim 6 or 7, comprising a plurality of spraying nozzles (102) emerging from said ogive (124), a plurality of junction ducts (106) connecting said supply duct (105) and said plurality of spraying nozzles (102) emerging from said ogive (124).

9. End accessory (100) according to claim 8, wherein said spraying nozzles (102) emerging from said ogive (124) are circumferentially arranged with respect to a rotation axis (R) of said fan (122).

10. End accessory (100) according to one or more of the preceding claims, comprising a plurality of spraying nozzles arranged on the blades (122a) of said fan (122), said blades (122a) also defining a plurality of junction ducts (106) for a connection between said supply duct (105) and said plurality of spraying nozzles (102) arranged on the blades (122a).

11. Agricultural shoulder sprayer or atomizer (1), comprising:
- a main body (10) supporting a tank (15);
- an end accessory (100) according to one or more of claims 1 to 10;
- a manoeuvring arm (20) connected to said end accessory (100) and defining a connection duct (25) between said tank (15) and said supply duct (105) inside said end accessory (100); and
- a power unit comprising said actuation means (140) and configured to move said rotating portion (120) and/or to pressurize a liquid between said tank (15) and said end accessory (100).

12. Sprayer (1) according to claim 11, wherein said power unit comprises a peristaltic pump configured to pressurize said liquid between said tank (15) and said end accessory (100).

13. Sprayer (1) according to claim 11 or 12, comprising a control interface for controlling a rotation speed of said fan (122) and/or a pressure of the liquid between said tank (15) and said end accessory (100).

14. Sprayer (1) according to claim 13, wherein said control interface comprises a joint control device, an output of said joint control device jointly controlling said rotation speed of said fan (122) and said liquid pressure.

15. Sprayer (1) according to claim 13 or 14, comprising a rotation control device, for an independent control of said rotation speed and/or a pressure control device, for an independent control of said pressure.

16. Sprayer (1) according to claim 15, comprising a knob (30), preferably fixed to said manoeuvring arm (20), said knob (30) supporting said rotation control device and/or said pressure control device and/or said joint control device.

## Patentansprüche

1. Endzubehör (100) für landwirtschaftliche Schultersprühgeräte oder -zerstäuber, einschließend:
- einen Stützabschnitt (110), der an einem Manövrierarm (20) des landwirtschaftlichen Schultersprühgeräts oder
- zerstäubers (1) befestigt werden kann und einen Verbindungskanal (25) innerhalb des Manövrierarms (20) aufweist;
- einen Drehabschnitt (120), der drehbar mit dem Stützabschnitt (110) verbunden ist, wobei der Drehabschnitt (120) eine Vielzahl von Flügeln (122a) umfasst, die ein Gebläse (122) definieren;
- Betätigungsmittel (140), die mit dem Drehabschnitt (120) verbunden sind, um eine gesteuerte Drehung des Drehabschnitts (120) in Bezug auf den Stützabschnitt (110) auszuführen; und
- mindestens eine Sprühdüse (102), die zum Ausstoßen eines zerstäubten Fluids ausgelegt ist und mindestens einen Versorgungskanal (105) der Sprühdüse (102) definiert, wobei der Stützabschnitt (110) ein Einlassteilstück (106) des Versorgungskanals (105) aufweist, das ausgelegt ist, um mit einem gemeinsamen Auslassteilstück des Verbindungskanals (25) gekoppelt zu werden;
**dadurch gekennzeichnet, dass** die zumindest eine Sprühdüse (102) durch den Drehabschnitt (120) definiert ist, wobei der Drehabschnitt (120) zumindest teilweise den zumindest einen Versorgungskanal (105) definiert.

2. Endzubehör (100) nach Anspruch 1, wobei die mindestens eine Sprühdüse (102) einem Betriebsvolumen "E" zugewandt ist, das von einem Luftstrom getroffen wird, der vom Gebläse (122) während einer Drehung des Gebläses (122) erzeugt wird, wobei das Betriebsvolumen "E" in Bezug auf die Richtung des Luftstroms hinter dem Gebläse (122) angeordnet ist.

3. Endzubehör (100) nach Anspruch 1 oder 2, umfassend einen röhrenförmigen Körper (150), der mit dem Gebläse (122) assoziiert ist, um eine Mantelgebläseauslegung zu definieren, wobei der röhrenförmige Körper (150) vorzugsweise am Stützabschnitt (110) fixiert ist.

4. Endzubehör (100) nach Anspruch 3, wobei der röhrenförmige Körper (150) einen Lufteinlass (151) für das Gebläse (122) aufweist, der am Stützabschnitt (110) und vorzugsweise stromaufwärts des Betriebsvolumens "E" angeordnet ist.

5. Endzubehör (100) nach einem oder mehreren der vorhergehenden Ansprüche, wobei die mindestens eine Sprühdüse (102) parallel zu einer Rotationsachse (R) des Gebläses (122) ausgerichtet ist.

6. Endzubehör (100) nach einem oder mehreren der vorhergehenden Ansprüche, wobei der Drehabschnitt (120) einen Spitzbogen (124) aufweist, der koaxial und einstückig mit dem Gebläse (122) ist.

7. Endzubehör (100) nach Anspruch 6, wobei ein Endabschnitt des Spitzbogens (124) einen Vorsprung (126) abstützt, der sich entlang einer Rotationsachse (R) des Gebläses (122) erstreckt, wobei der Vorsprung (126) mindestens eine Sprühdüse (102) umfasst.

8. Endzubehör (100) nach Anspruch 6 oder 7, umfassend eine Vielzahl von Sprühdüsen (102), die aus dem Spitzbogen (124) austreten, eine Vielzahl von Zusammenfügungskanälen (106), die den Versorgungskanal (105) und die Vielzahl von Sprühdüsen (102), die aus dem Spitzbogen (124) austreten, verbinden.

9. Endzubehör (100) nach Anspruch 8, wobei die Sprühdüsen (102), die aus dem Spitzbogen (124) austreten, in Umfangsrichtung in Bezug auf eine Rotationsachse (R) des Gebläses (122) angeordnet sind.

10. Endzubehör (100) nach einem oder mehreren der vorhergehenden Ansprüche, umfassend eine Vielzahl von Sprühdüsen, die an den Flügeln (122a) des Gebläses (122) angeordnet sind, wobei die Flügel (122a) auch eine Vielzahl von Zusammenfügungskanälen (106) für eine Verbindung zwischen dem Versorgungskanal (105) und der Vielzahl von Sprühdüsen (102), die an den Flügeln (122a) angeordnet sind, definieren.

11. Landwirtschaftliches/r Schultersprühgerät oder - zerstäuber (1), umfassend:
- einen Hauptkörper (10), der einen Tank (15) abstützt;
- ein Endzubehör (100) nach einem oder mehreren der Ansprüche 1 bis 10;
- einen Manövrierarm (20), der mit dem Endzubehör (100) verbunden ist und einen Verbindungskanal (25) zwischen dem Tank (15) und dem Versorgungskanal (105) innerhalb des Endzubehörs (100) definiert; und
- eine Antriebseinheit, die die Betätigungsmittel (140) umfasst und dazu ausgelegt ist, den Drehabschnitt (120) zu bewegen und/oder eine Flüssigkeit zwischen dem Tank (15) und dem Endzubehör (100) unter Druck zu setzen.

12. Sprühgerät (1) nach Anspruch 11, wobei die Antriebseinheit eine peristaltische Pumpe umfasst, die ausgelegt ist, um die Flüssigkeit zwischen dem Tank (15) und dem Endzubehör (100) unter Druck zu setzen.

13. Sprühgerät (1) nach Anspruch 11 oder 12, umfassend eine Steuerschnittstelle zum Steuern einer Rotationsgeschwindigkeit des Gebläses (122) und/oder eines Drucks der Flüssigkeit zwischen dem Tank (15) und dem Endzubehör (100).

14. Sprühgerät (1) nach Anspruch 13, wobei die Steuerschnittstelle eine gemeinsame Steuervorrichtung umfasst, wobei ein Ausgang der gemeinsamen Steuervorrichtung die Rotationsgeschwindigkeit des Gebläses (122) und den Flüssigkeitsdruck gemeinsam steuert.

15. Sprühgerät (1) nach Anspruch 13 oder 14, umfassend eine Rotationssteuervorrichtung für eine unabhängige Steuerung der Rotationsgeschwindigkeit und/oder eine Drucksteuervorrichtung für eine unabhängige Steuerung des Drucks.

16. Sprühgerät (1) nach Anspruch 15, umfassend einen Knopf (30), der vorzugsweise am Manövrierarm (20) fixiert ist, wobei der Knopf (30) die Rotationssteuervorrichtung und/oder die Drucksteuervorrichtung und/oder die gemeinsame Steuervorrichtung abstützt.

## Revendications

1. Accessoire d'extrémité (100) pour pulvérisateurs ou atomiseurs agricoles en bandoulière, incluant :
- une partie de support (110) pouvant être liée à un bras de manœuvre (20) du pulvérisateur ou atomiseur agricole en bandoulière (1) présentant un conduit de raccordement (25) à l'intérieur dudit bras de manœuvre (20) ;
- une partie rotative (120) reliée de manière rotative à ladite partie de support (110), ladite partie rotative (120) comprenant une pluralité de pales (122a) définissant un ventilateur (122) ;
- des moyens d'actionnement (140) reliés à ladite partie rotative (120) pour effectuer une rotation contrôlée de ladite partie rotative (120) par rapport à ladite partie de support (110) ; et
- au moins une buse de pulvérisation (102) configurée pour l'émission d'un fluide atomisé et définissant au moins un conduit d'alimentation (105) de ladite buse de pulvérisation (102), ladite partie de support (110) comportant une section d'entrée (106) dudit conduit d'alimentation (105) configurée pour être couplée à une section de sortie mutuelle d'un dit conduit de raccordement (25) ;
**caractérisé en ce que** ladite au moins une buse de pulvérisation (102) est définie par ladite partie rotative (120), ladite partie rotative (120) définissant au moins partiellement ledit au moins un conduit d'alimentation (105).

2. Accessoire d'extrémité (100) selon la revendication 1, dans lequel ladite au moins une buse de pulvérisation (102) fait face à un volume de fonctionnement « E » frappé par un flux d'air produit par ledit ventilateur (122) pendant une rotation dudit ventilateur (122), ledit volume de fonctionnement « E » étant disposé en aval dudit ventilateur (122) par rapport à la direction dudit flux d'air.

3. Accessoire d'extrémité (100) selon la revendication 1 ou 2, comprenant un corps tubulaire (150) associé audit ventilateur (122) pour définir une configuration de ventilateur canalisé, ledit corps tubulaire (150) étant de préférence fixé à ladite partie de support (110).

4. Accessoire d'extrémité (100) selon la revendication 3, dans lequel ledit corps tubulaire (150) comporte une entrée d'air (151) pour ledit ventilateur (122) disposée en correspondance de ladite partie de support (110) et de préférence en amont du volume de fonctionnement « E ».

5. Accessoire d'extrémité (100) selon une ou plusieurs des revendications précédentes, dans lequel ladite au moins une buse de pulvérisation (102) est orientée parallèlement à un axe de rotation (R) dudit ventilateur (122) .

6. Accessoire d'extrémité (100) selon une ou plusieurs des revendications précédentes, dans lequel la partie rotative (120) comporte une ogive (124) étant coaxiale et solidaire dudit ventilateur (122).

7. Accessoire d'extrémité (100) selon la revendication 6, dans lequel une partie d'extrémité de ladite ogive (124) supporte une saillie (126) se prolongeant le long d'un axe de rotation (R) dudit ventilateur (122), ladite saillie (126) comprenant au moins une buse de pulvérisation (102).

8. Accessoire d'extrémité (100) selon la revendication 6 ou 7, comprenant une pluralité de buses de pulvérisation (102) émergeant de ladite ogive (124), une pluralité de conduits de jonction (106) reliant ledit conduit d'alimentation (105) et ladite pluralité de buses de pulvérisation (102) émergeant de ladite ogive (124) .

9. Accessoire d'extrémité (100) selon la revendication 8, dans lequel lesdites buses de pulvérisation (102) émergeant de ladite ogive (124) sont disposées sur la circonférence par rapport à un axe de rotation (R) dudit ventilateur (122).

10. Accessoire d'extrémité (100) selon une ou plusieurs des revendications précédentes, comprenant une pluralité de buses de pulvérisation disposées sur les pales (122a) dudit ventilateur (122), lesdites pales (122a) définissant également une pluralité de conduits de jonction (106) pour un raccordement entre ledit conduit d'alimentation (105) et ladite pluralité de buses de pulvérisation (102) disposées sur les pales (122a).

11. Pulvérisateur ou atomiseur agricole en bandoulière (1), comprenant :
- un corps principal (10) supportant un réservoir (15) ;
- un accessoire d'extrémité (100) selon une ou plusieurs des revendications 1 à 10 ;
- un bras de manœuvre (20) relié audit accessoire d'extrémité (100) et définissant un conduit de raccordement (25) entre ledit réservoir (15) et ledit conduit d'alimentation (105) à l'intérieur dudit accessoire d'extrémité (100) ; et
- une unité de puissance comprenant lesdits moyens d'actionnement (140) et configurée pour déplacer ladite partie rotative (120) et/ou pour mettre sous pression un liquide entre ledit réservoir (15) et ledit accessoire d'extrémité (100).

12. Pulvérisateur (1) selon la revendication 11, dans lequel ladite unité de puissance comprend une pompe péristaltique configurée pour mettre sous pression ledit liquide entre ledit réservoir (15) et ledit accessoire d'extrémité (100).

13. Pulvérisateur (1) selon la revendication 11 ou 12, comprenant une interface de commande servant à commander une vitesse de rotation dudit ventilateur (122) et/ou une pression du liquide entre ledit réservoir (15) et ledit accessoire d'extrémité (100).

14. Pulvérisateur (1) selon la revendication 13, dans lequel ladite interface de commande comprend un dispositif de commande commun, une sortie dudit dispositif de commande commun commandant conjointement ladite vitesse de rotation dudit ventilateur (122) et ladite pression du liquide.

15. Pulvérisateur (1) selon la revendication 13 ou 14, comprenant un dispositif de commande de rotation, pour une commande indépendante de ladite vitesse de rotation et/ou un dispositif de commande de pression, pour une commande indépendante de ladite pression.

16. Pulvérisateur (1) selon la revendication 15, comprenant un bouton (30), de préférence fixé audit bras de manœuvre (20), ledit bouton (30) supportant ledit dispositif de commande de rotation et/ou ledit dispositif de commande de pression et/ou ledit dispositif de commande commun.
